# EUROPÄISCHE PATENTSCHRIFT

(11) **EP 4 484 013 B1**
(45) Veröffentlichungstag und Bekanntmachung des Hinweises auf die Patenterteilung: **02.09.2026**
(21) Anmeldenummer: 24180368.3
(22) Anmeldetag: 06.06.2024
(51) Int. Cl.: B02C 1/02, B02C 4/32, F16K 17/04, F16K 17/18, B02C 23/04, B02C 25/00, B02C 4/34, F16K 17/08

(54) **BRECHER FÜR MINERALISCHE WERKSTOFFE ODER RECYCLINGWERKSTOFFE**
BREAKER FOR MINERAL MATERIALS OR RECYCLED MATERIALS
BROYEUR POUR MATÉRIAUX MINÉRAUX OU MATÉRIAUX RECYCLÉS

(30) Priorität: 28.06.2023 DE 102023116992
(43) Veröffentlichungstag der Anmeldung: 01.01.2025
(73) Patentinhaber: KLEEMANN GMBH, 73037 Göppingen (DE)
(72) Erfinder: KRAUSS, Till, 73098 Rechberghausen (DE); MEYER, Gerd, 73340 Amstetten (DE); MEIER, Jochen, 72584 Hülben (DE); HÄBERLE, Steffen, 89542 Herbrechtingen (DE); TEICHERT, Rainer, 42781 Haan (DE)
(74) Vertreter: Herrmann, Jochen

(56) Entgegenhaltungen:
- EP-A1- 2 774 681
- CN-A- 107 762 994
- DE-A1- 10 015 785
- DE-A1- 4 436 742
- US-A1- 2015 224 508

## Beschreibung

Die Erfindung betrifft einen Brecher für mineralische Werkstoffe oder Recyclingwerkstoffe, insbesondere Rotationsprallbrecher, Backenbrecher, Kegelbrecher oder Walzenbrecher, mit einem Brechaggregat, das einen ersten Brechkörper, insbesondere einen Rotor oder eine Brechbacke aufweist, wobei dem ersten Brechkörper ein zweiter bewegbarer Brechkörper, insbesondere eine Prallschwinge oder eine Brechbacke, zugeordnet ist, wobei zwischen den Brechkörpern ein Brechspalt gebildet ist, wobei mit einem der Brechkörper ein Hydraulikzylinder gekoppelt ist, der angeordnet und ausgebildet ist, um in einer Ausweichbewegung eine, die Breite des Brechspalts vergrößernde Bewegung des angekoppelten Brechkörpers zuzulassen, wobei ein Druckraum des Hydraulikzylinders an eine Druckkammer eines Druck-Entlastungsventils einer Überlast-Auslöseeinrichtung angeschlossen ist, wobei ein Kolben des Druck-Entlastungsventils in einem Zylinder zwischen einer Schließstellung und einer Öffnungsstellung verstellbar ist, wobei in der Schließstellung eine fluidleitende Verbindung zwischen der Druckkammer und einem Druck-Ausgleichsbereich gesperrt und in der Öffnungsstellung die fluidleitende Verbindung zumindest bereichsweise freigegeben ist, und wobei der Kolben wenigstens eine Kolben-Druckflächen aufweist, mittels der der Kolben die Druckkammer in der Schließstellung quer zur Stellrichtung des Kolbens begrenzt.

Aus DE 10 2017 002 079 B4 ist eine Prallbrechanlage bekannt, bei der zwischen einem drehbaren Rotor und einer Prallschwinge ein veränderbarer Brechspalt eingestellt ist. Im normalen Brechbetrieb wird das zu brechende Material dem Rotor über eine Materialzuführung zugeleitet. Der Rotor schleudert dieses gegen die Prallschwinge. Die dabei auftretenden Kräfte führen zum Brechen des Gesteinsmaterials. Das Gesteinsmaterial wird somit auf die gewünschte Korngröße zerkleinert und kann über den Brechspalt aus dem Brechergehäuse herausfallen. Nun kann es vorkommen, dass nicht brechbare Körper dem Rotor zugeführt werden. Beispielsweise kann es sich hierbei um Eisenteile handeln. Dies stellt eine kritische Überlastsituation für den Prallbrecher dar. Insbesondere besteht die Gefahr, dass es hierbei zu Schäden an dem Brecher kommt. Damit eine derartige Überlastsituation beherrschbar ist, ist an die Prallschwinge eine Kolben-Zylindereinheit angekoppelt. Mittels dieser kann die Stellung der Prallschwinge und damit die Breite des Brechspalts verändert werden. Die Kolben-Zylindereinheit umfasst eine Gasfeder, gegen die die Prallschwinge abgestützt ist.

Im normalen Brechbetrieb wird die Breite des Brechspalts auf das gewünschte Maß eingestellt. Im kritischen Überlastfall kann die Gasfeder komprimiert werden und damit die Prallschwinge ausweichen. Auf diese Weise lässt sich impulsartig der Brechspalt vergrößern. Der nicht brechbare Körper kann dann aus dem Brechspalt herausfallen. Anschließend wird die Breite des Brechspalts wieder auf das gewünschte Maß eingestellt.

Mit der in der DE 10 2017 002 079 B4 vorgeschlagenen Gasfeder wird eine Elastizität in die Abstützung der Prallschwinge eingebracht. Während des Brechbetriebs werden die Kräfte, aufgrund unterschiedlich harter und unterschiedlich großer Gesteinsbrocken in einem gewissen zulässigen Maß variieren. Die elastische Gasfeder bewirkt, in Reaktion auf diese wechselnden Kräfte, eine ständige Variation des Brechspalts und damit der Korngröße des gebrochenen Materials, was unerwünscht ist.

Aus EP 0 019 541 B1 ist eine Prallmühle bekannt, bei der der Brechspalt über einen Hydraulikzylinder eingestellt werden kann. Der Hydraulikzylinder weist einen Kolben auf, an den eine Kolbenstange angekoppelt ist. Der Kolben ist in einem Zylinderraum verstellbar. Die Kolbenstange ist mit der Prallschwinge verbunden. Für den Fall einer Überlast-Situation ist ein Überlastventil vorgesehen. Falls ein nicht brechbarer Körper in den Brechraum gelangt, wird das Überlastventil ausgelöst. Hierdurch vergrößert sich der Brechspalt und der nicht brechbare Körper kann wieder aus dem Brechraum fallen.

Bei Brechern, insbesondere bei Rotationsprallbrechern ist es nun häufig so, wie dies bereits vorstehend angedeutet wurde, dass im normalen Brechbetrieb Gesteinsmaterial mit unterschiedlicher Größe und unterschiedlicher Härte dem Brechaggregat zugeführt werden. Diese Gesteinsmaterialien sind für den Rotationsprallbrecher beherrschbar und können gebrochen werden. Insofern muss ein derartiger unkritischer Fall unterschieden werden, von einer kritischen Überlast-Situation, in der ein nicht brechbarer Körper in den Bereich des Brechaggregats gelangt. Das aus der EP 0 019 541 B1 bekannte Verfahren eignet sich für langsam laufende Brechervarianten. Hierbei müssen die Maschinenkomponenten zur Einstellung des Brechspalts, sowie die Kolbenstange des Hydraulikzylinders so weit bewegt werden, dass sich durch die Fluidkompression ein Kammerdruck einstellt, der zum Auslösen des Druck-Entlastungsventils führt. Es ist naheliegend, dass der Einstelldruck des Druck-Entlastungsventils nicht zu niedrig sein darf, da andernfalls durch normale Brecherlasten eine Verstellung des Brechspalts stattfinden würde, was maßgebliche Qualitätseinbußen des Endmaterials mit sich bringen würde. Bei schnelllaufenden Brechervarianten ist eine schnelle Öffnung des Brechspalts gefordert. Entsprechend muss das Druck-Entlastungsventils schnell reagieren können und gleichzeitig ausreichend dimensioniert sein, um den Druckanstieg durch die sich sehr schnell beschleunigenden Maschinenkomponenten zur Einstellung des Brechspalts begrenzen zu können.

Weitere Brecher mit Überlast-Auslöseeinrichtungen sind aus EP 3 919 177 B1, EP 2 774 681 B1 und US 2015/0224508 A1 bekannt.

Aufgabe der Erfindung ist es einen Brecher der eingangs erwähnten Art bereitzustellen, bei dem die Überlast-Auslöseeinrichtung im Überlastfall schnell anspricht, und wobei gleichzeitig im Normalbetrieb der Brechspalt im Brechbetrieb möglichst konstant gehalten wird.

Diese Aufgabe wird dadurch gelöst, dass im Schließzustand des Druck-Entlastungsventils die Projektion der Kolben-Druckfläche oder der Kolben-Druckflächen des Kolbens in eine Projektionsebene quer zur Stellrichtung des Kolbens, insbesondere senkrecht zur Stellrichtung des Kolbens nur einen Teil der Druckkammer quer zur Stellrichtung des Kolbens begrenzt.

Mit dieser Lösung werden die Kolben-Druckfläche-/n und damit die Wirkfläche-/n, über die eine Kraft zur Verstellung des Kolbens und damit zur Auslösung des Druck-Entlastungsventils eingebracht wird/werden, gegenüber den aus dem Stand der Technik bekannten Lösungen verkleinert. Infolge dieser kleineren Flächen resultieren geringere Zuhaltekräfte, die dann auch einfacher abgestützt werden können. Mit anderen Worten entstehen am Kolben beherrschbare Kräfte, die außerhalb der Druckkammer des Druck-Entlastungsventils einfach abgefangen werden können, um das Druck-Entlastungsventil im normalen Brecher-Betrieb im Schließzustand zu halten. Zusätzlich wird durch diese Bauweise eine Massenreduktion des Kolbens und damit der beschleunigten Bauteile des Druck-Entlastungsventils erreicht. Hierdurch wird das Ansprechverhalten im Überlastfall deutlich verbessert.

Ein erfindungsgemäßes Druck-Entlastungsventils kann so gestaltet sein, dass an dem Kolben mehrere Kolben-Druckflächen vorhanden sind, die dann in eine Projektionsebene quer zur Stellrichtung des Kolbens, nur einen Teil der Druckkammer quer zur Stellrichtung des Kolbens begrenzen. Dabei müssen die mehreren Kolben-Druckflächen nicht alle in einer Ebene am Kolben vorhanden sein. Denkbar ist es vielmehr auch, dass die Kolben-Druckflächen voneinander abweichende Formen aufweisen.

Gemäß einer bevorzugten Erfindungsvariante kann es vorgesehen sein, dass eine Überbrückungsvorrichtung vorgesehen ist, gegenüber der der Kolben verstellbar ist, dass die Überbrückungsvorrichtung wenigstens einen Druckflächenabschnitt aufweist, der die Druckkammer im Schließzustand quer zur Stellrichtung des Kolbens begrenzt, und dass eine Projektion des Druckflächenabschnitts oder der Druckflächenabschnitte in Richtung der Stellbewegung des Kolbens in die Projektionsebene, insbesondere in die Schließebene, die Kolben-Druckfläche-/n nicht oder nicht vollständig überdeckt. Hierdurch wird eine einfache Bauweise erreicht.

Die Überbrückungsvorrichtung kann insbesondere in Form eines Vorsprungs, vorzugsweise in Form eines Dorns, ausgebildet sein.

Es kann so sein, dass sich die Kolben-Druckfläche-/n nur über einen Teilbereich der Querschnittsfläche der Druckkammer quer zur Stellrichtung des Kolbens erstreckt. Die verbleibende Querschnittsfläche der Druckkammer kann dann von dem oder den Druckflächenabschnitt-/en der Überbrückungsvorrichtung begrenzt sein.

Vorzugsweise ist es so, dass die Überbrückungsvorrichtung ortsfest im oder am Zylinder angeordnet ist.

Denkbar ist es auch, dass die Überbrückungsvorrichtung gegenüber dem Kolben beweglich ist. Beispielsweise kann es so sein, dass die Überbrückungsvorrichtung so befestigt ist, dass sie in Richtung der Verstellbewegung des Kolbens und/oder quer zur Richtung der Verstellbewegung des Kolbens beweglich ist.

Weiter vorzugsweise kann es so sein, dass der Druckflächenabschnitt der Überbrückungsvorrichtung zentrisch innerhalb des Druckraums angeordnet ist, wobei weiter vorzugsweise zwischen der radial äußeren Begrenzungswand der Druckkammer und dem zugeordneten Außenumfang des Druckflächenabschnitts ein Ringraum gebildet ist, innerhalb dem der Kolben verstellbar ist.

Wenn vorgesehen ist, dass die Flächennormalen auf die Projektionen der Kolben-Druckfläche-/n und des/der Druckflächenabschnitt-/e in die gleiche Richtung weisen, dann lässt sich die Überbrückungsvorrichtung einfach der Druckkammer des Druck-Entlastungsventils zuordnen.

Ein erfindungsgemäßer Brecher kann beispielweise so gestaltet sein, dass die Überbrückungsvorrichtung mittels eines Verbindungsabschnitts mit dem/einem Zylinder des Druck-Entlastungsventils verbunden, insbesondere ortsfest oder beweglich verbunden ist, dass die Überbrückungsvorrichtung an einem Träger einen Kopf im Zylinderinnenraum hält, und dass der Kopf den wenigstens einen Druckflächenabschnitt bildet oder trägt. Über den Kopf und den Verbindungsabschnitt können die in der Druckkammer anstehenden Lasten sicher abgetragen werden. Denkbar ist, dass der Kopf, und/oder der Verbindungsabschnitt eine Führung für den, insbesondere hülsenförmig gestalteten, Kolben bildet/bilden. Hierdurch wird der Teileaufwand verringert.

Eine besonders bevorzugte Erfindungsvariante ist dergestalt, dass der Kolben eine zylindrische Außenwand aufweist, mittels der er der Zylinderinnenwand des Zylinders gegenübersteht, der die Druckkammer bildet, und dass der Kolben ringförmig ausgebildet ist und eine vorzugsweise zylindrische Innenwand aufweist. Der Kolben ist dann als vorzugsweise hülsenförmiges Bauteil ausgebildet. Der Kolben kann aufgrund dieser Bauweise relativ leicht und dennoch stabil gestaltet werden. Das dem Druckraum zugeordnete Ende des Kolbens kann dann zumindest teilweise die Kolben-Druckfläche bilden. Mit anderen Worten kann es so sein, dass die Hülsenstirnseite zumindest teilweise die Kolben-Druckfläche-/n bildet.

Eine besonders bevorzugte Ausgestaltungsvariante der Erfindung kann dergestalt sein, dass der Kolben mit einem Stützabschnitt außerhalb der Druckkammer gegenüber einer Feder abgestützt ist, wobei die Feder in Richtung der Schließstellung des Kolbens eine Vorspannkraft in den Kolben einbringt, um den Kolben gegen einen Ventilsitz vorzuspannen. Hierdurch wird eine sichere Positionierung des Kolbens in der Schließstellung mit beherrschbaren Federkräften erreicht. Gleichzeitig wird auf technisch einfache Weise eine schnelle Rückführung des Kolbens nach Beendigung einer Überlastsituation möglich. Die Feder kann ein mechanisches Element, beispielsweise eine Schrauben- oder eine Tellerfeder sein. Denkbar ist es auch, dass die Feder von einem Fluidsystem, insbesondere von einem Hydrauliksystem, gebildet ist. Denkbar ist, dass dieses Hydrauliksystem unter Einbeziehung des Hydraulikzylinders, insbesondere des Raums des Hydraulikzylinders, der die Kolbenstange aufnimmt, gebildet ist. Denkbar ist, dass die Feder von mehreren Federelementen gebildet ist.

Eine besonders bevorzugte Erfindungsvariante ist derart, dass der Kolben einen Niederdruckbereich des Druck-Entlastungsventils gegenüber der Druckkammer abgrenzt, und dass der Kolben bei seiner Verstellung von der Schließ- in die Öffnungsstellung mit einem Stellabschnitt in dem Niederdruckbereich verstellt wird. In der Schließstellung bietet der Niederdruckbereich und damit der hierin gehaltene Bereich des Stellabschnitts des Kolbens dem Fluid der Druckkammer keine Angriffsfläche. Somit beeinflusst der Differenzdruck die Schließkraft.

Steht der Niederdruckbereich mit der Umgebung in luftleitender Verbindung, dann kann die Schließkraft unterstützt werden, beispielsweise mit einer Feder oder einem Federsystem, wie dies bereits vorstehend beschrieben wird. Diese Feder oder das Federsystem muss dann entsprechend ausreichend stark dimensioniert sein.

Denkbar ist jedoch auch, dass der Niederdruckbereich zur Kolbenstangenseite des Hydraulikzylinders entlastet wird. Dabei kann es dann auch so sein, dass dem Raum des Hydraulikzylinders, der die Kolbenstange aufnimmt, ein Druckregelsystem zugeordnet ist, der das Hydraulikfluid in diesem Bereich vorspannt. Hierdurch wird dann die Schließkraft des Kolbens unterstützt (beispielsweise kann zusätzlich eine Feder eingesetzt sein - siehe oben) oder bewirkt. Zudem ergibt sich hierdurch ein Druck-Entlastungsventil, das angepasst auf den jeweiligen Belastungsfall individuell reagieren kann. Wird bei einer relativ hohen Belastung des Brechers, die noch keine Überlastsituation darstellt, der Druck in dem Druckraum des Hydraulikzylinders erhöht, wobei der Hydraulikzylinders-Kolben des Hydraulikzylinders in den Druckraum einfährt, so fällt der Druck auf der Stangenseite (dies ist der Bereich des Hydraulikzylinders, der die Kolbenstange aufnimmt) ab. Das Druckregelsystem regelt dann den Druck auf der Stangenseite nach. Hier hat die Druckregelung eine begrenzte Kapazität, um den Druck aufrechtzuerhalten. Am Druck-Entlastungsventil führt somit die Druckregelung dazu, dass der Kolben des Druck-Entlastungsventils in der Schließstellung verbleibt. Der Brechbetrieb kann mithin in dieser Lastsituation fortgesetzt werden.

Tritt nun eine Überlastsituation auf, so fällt der Druck auf der Stangenseite stark ab und die Druckregelung hält den Druck auf der Stangenseite nicht mehr aufrecht.

Gleichzeitig führt der starke Druckanstieg auf der Bodenseite des Hydraulikzylinders dann zu einer Öffnung des Druck-Entlastungsventils. Somit kann sich das Druck-Entlastungsventil adaptiv an verschiedenen Last-Situationen anpassen.

Eine mögliche Erfindungsvariante kann so sein, dass der Zylinder des Druck-Entlastungsventils im Bereich der Druckkammer wenigstens eine Ausströmöffnung aufweist, die in der Schließstellung des Kolbens von einem an die Kolben-Druckfläche anschließenden Körperbereich des Kolbens überdeckt und in der Öffnungsstellung des Kolbens zumindest bereichsweise freigegeben ist, und dass die Ausströmöffnung über einen Leitungsabschnitt mittelbar oder unmittelbar zu einem Tank und/oder mittelbar oder unmittelbar über eine Rückführleitung mit einer Kammer, die eine Kolbenstange des Hydraulikzylinders aufnimmt, in Verbindung steht.

Eine besonders bevorzugte Erfindungsvariante kann dergestalt sein, dass die Projektion der Kolben-Druckfläche oder der Kolben-Druckflächen des Kolbens quer zur Stellrichtung des Kolbens in die Schließebene bevorzugt mindestens 5 % maximal 80 % und besonders bevorzugt mindestens 10 % und maximal 50 % der Projektion der Kolben-Druckfläche oder der Kolben-Druckflächen des Kolbens quer zur Stellrichtung des Kolbens in die Schließebene zuzüglich der Druckflächenabschnitte der Überbrückungsvorrichtung überdeckt.

In einer bevorzugten Erfindungsvariante befindet sich maximal 50 %, bevorzugt maximal 25 %, der Kolben-Druckfläche oder der Kolben-Druckflächen des Kolbens in der Schliessstellung quer zur Stellrichtung des Kolbens in der Schließebene im Bereich der Ausströmöffnung.

Die Aufgabe der Erfindung wird auch gelöst mit einem Verfahren zum Betrieb eines Brechers, bei dem vorgesehen ist, dass bei Überschreiten eines Druck-Schwellwertes im Druckraum des Hydraulikzylinders der Kolben des Druck-Entlastungsventils verstellt und bei Unterschreiten eines Entlastungsdrucks in der Druckkammer der Kolben mittels einer Feder zurück in die Schließstellung bewegt wird.

Die Aufgabe der Erfindung wird weiterhin auch gelöst mit einem Verfahren zum Betrieb eines Brechers, bei dem vorgesehen ist, dass im Schließzustand des Druck-Entlastungsventils die Projektion der Kolben-Druckfläche oder der Kolben Druckflächen des Kolbens in eine Projektionsebene quer zur Stellrichtung des Kolbens nur einen Teil der Druckkammer quer zur Stellrichtung des Kolbens begrenzt, dass bei Überschreiten eines Druck-Schwellwertes im Druckraum des Hydraulikzylinders der Kolben des Druck-Entlastungsventils verstellt und bei Unterschreiten eines Entlastungsdrucks in der Druckkammer der Kolben mittels einer Feder zurück in die Schließstellung bewegt wird.

Die Erfindung wird im Folgenden anhand von in den Zeichnungen dargestellten Ausführungsbeispielen näher erläutert. Es zeigen:
- Figur 1:: in perspektivischer Prinzipdarstellung ein Brechaggregat eines Rotationsprallbrechers mit angeschlossenen Maschinenkomponenten des Brechers,
- Figuren 2 und 3:: in schematischer Darstellung das Brechaggregat gemäß Figur 1 mit einer Überlast-Auslöseeinrichtung,
- Figur 4:: in schematischer Darstellung die Überlast-Auslöseeinrichtung und,
- Figur 5:: in schematischer Darstellung ein Druck-Entlastungsventil der Überlast-Auslöseeinrichtung.

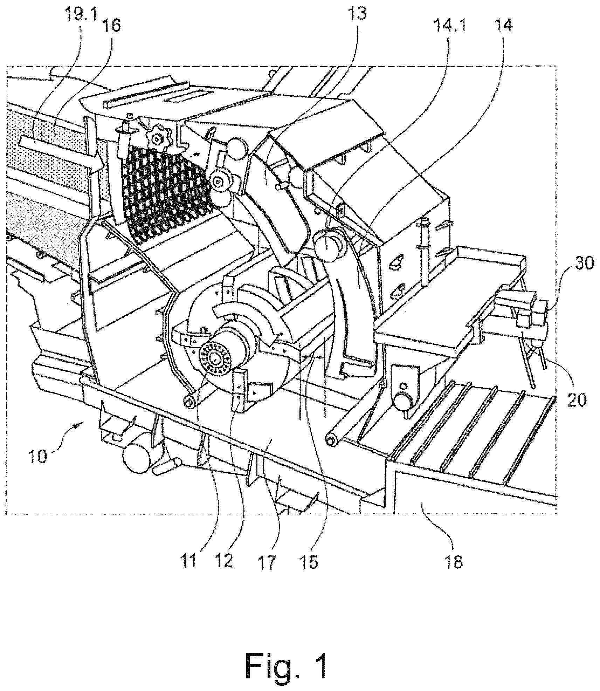

In Figur 1 ist ein Brechaggregat 10 eines Rotationsprallbrechers dargestellt. Das Brechaggregat 10 umfasst ein Brechergehäuse, in dem ein beweglicher Brechkörper 11 drehbar gelagert ist. Entsprechend ist der bewegliche Brechkörper 11 vorliegend als Rotor ausgebildet. Der Rotor trägt im Bereich seines Außenumfangs Schlagleisten 12.

Innerhalb des Brechergehäuses ist eine obere Prallschwinge 13 angeordnet. Weiterhin ist im Brechergehäuse auch ein weiterer Brechkörper 14 angeordnet, der vorliegend eine untere Prallschwinge bildet.

Zwischen dem Rotor (Brechkörper 11) und der unteren Prallschwinge (Brechkörper 14) wird ein Brechspalt 15 gebildet. Bei drehendem Rotor bilden die radial äußeren Enden der Schlagleisten 12 einen äußeren Brechkreis. Dieser Brechkreis bildet zusammen mit einer zugewandten Fläche der unteren Prallschwinge den Brechspalt 15. Die untere Prallschwinge 14 ist mittels eines Schwenklagers 14.1 schwenkbar gelagert. Über die gewählte Schwenkstellung der unteren Prallschwinge kann die Breite des Brechspalts 15 eingestellt werden.

Wie Figur 1 weiter erkennen lässt, ist dem Brechaggregat 10 eine Materialzuführung 16 zugeordnet. Über diese Materialzuführung 16 kann zu brechendes Material 19.1 in den Brechraum gefördert werden. Die Förderrichtung ist in Figur 1 mit einem Pfeil symbolisiert. Wenn das zu brechende Material 19.1 in den Bereich des Brechkörpers 11 gelangt, wird es mittels der Schlagleisten 12 nach außen geschleudert. Dabei trifft dieses Material auf die obere Prallschwinge 13 und auf die untere Prallschwinge 14. Beim Aufprall auf eine Schlagleiste 12, auf im Brechraum befindliches zu brechendes Material oder auf die beiden Prallschwingen 13, 14 wird das zu zerkleinernde Material 19.1 gebrochen.

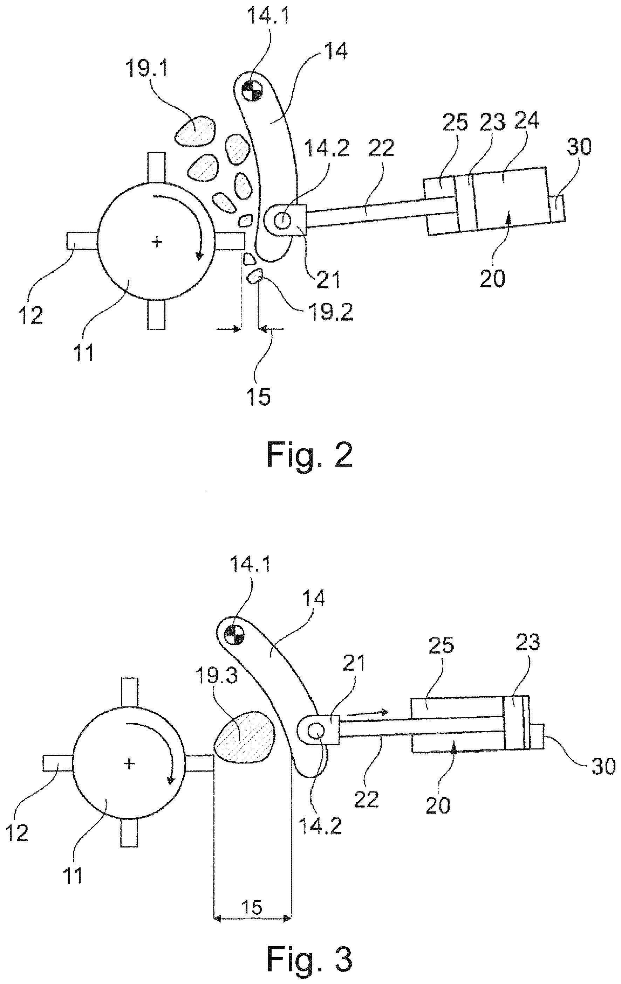

Für die untere Prallschwinge 14 ist dies beispielhaft in den Figuren 2 und 3 näher dargestellt. Beim Auftreffen des zu brechenden Materials 19.1 auf den Brechkörper 14 entsteht gebrochenes Material 19.2, wie dies Figur 2 zeigt. Sobald dieses gebrochene Material 19.2 eine Korngröße aufweist, die kleiner ist als der Brechspalt 15, fällt dieses gebrochene Material 19.2 durch den Brechspalt 15 hindurch. Es gelangt dann in einen Sammelbereich 17 unterhalb des beweglichen Brechkörpers 11 (Rotor). Wie Figur 1 zeigt, ist an den Sammelbereich 17 eine Fördereinrichtung 18 angeschlossen. Über diese Fördereinrichtung 18 kann das gebrochene Material 19.2 abtransportiert werden.

Wie Figur 2 weiter zeigt, ist der Brechkörper 14 mittels eines Aktuators in Form eines Hydraulikzylinders 20 gegenüber der Maschinenkonstruktion des Brechers abgestützt. Die Abstützung an der Maschinenkonstruktion, beispielsweise an dem Maschinengestell des Brechers, ist in den Zeichnungen nicht näher detailliert. Allerdings ist in Figur 1 erkennbar, dass der Hydraulikzylinder 20 geschützt im Wesentlichen außerhalb des Brechergehäuses montiert ist, in dem der Rotor aufgenommen ist.

Wie die Figuren 2 und 3 zeigen, weist der Hydraulikzylinder 20 einen Zylinder 25 auf, in dem ein Hydraulikzylinder-Kolben 23 verstellbar geführt ist. Der Hydraulikzylinder-Kolben 23 trägt eine Kolbenstange 22. Die Kolbenstange 22 ist an ihrem dem Hydraulikzylinder-Kolben 23 abgewandten Ende mit einem Koppelstück 21 ausgestattet, welches ein Lagerteil aufweist. Mittels dieses Lagerteils ist das Koppelstück 21 an ein Lager 14.2 des Brechkörpers 14 angeschlossen. Damit ist der Hydraulikzylinder 20 schwenkbar an dem Brechkörper 14 angekoppelt. Die Koppelstelle steht im Abstand zu dem Schwenklager 14.1.

Wie Figur 2 erkennen lässt, begrenzt der Hydraulikzylinder-Kolben 23 einen Druckraum 24 im Zylinder 25. In dem Druckraum 24 ist Hydraulikflüssigkeit, insbesondere Hydrauliköl, eingefüllt. Der Hydraulikzylinder-Kolben 23 wird gegenüber diesem Medium abgestützt. Damit werden die Kolbenstange 22 und der Brechkörper 14 in der in Figur 2 gezeigten vorgegebenen Brechstellung gehalten.

Abhängig von der anstehenden Brechaufgabe ist es erforderlich, die Betriebsposition des Brechspalts 15 geeignet einzustellen. Hierzu weist der Brecher eine Steuerungseinrichtung auf. Wenn ausgehend von der in Figur 2 gezeigten Position der Brechspalt 15 breiter eingestellt werden soll, so wird Hydraulikflüssigkeit aus dem Druckraum 24 abgelassen. Hierdurch fährt der Hydraulikzylinder-Kolben 23 weiter in den Zylinder 25 ein, bis der gewünschte Brechspalt 15 eingestellt ist. Wird hingegen ein engerer Brechspalt 15 gewünscht, so wird zusätzliche Hydraulikflüssigkeit in den Druckraum 24 eingefüllt. Hierdurch wird der Hydraulikzylinder-Kolben 23 unter Vergrößerung des Druckraums 24 verstellt. Die Kolbenstange 22 fährt weiter aus dem Zylinder 25 aus. Hierdurch wird der Brechkörper 14 im Uhrzeigersinn verschwenkt, sodass sich eine Verjüngung des Brechspalts 15 ergibt.

Wie die Figuren 2 und 3 zeigen, ist eine Überlast-Auslöseeinrichtung 30 verwendet. Diese kann entweder direkt mit dem Hydraulikzylinder 20 verbunden oder getrennt von diesem maschinenseitig verbaut sein.

Die Erfindung kann auch an einem anderen Gesteinsbrecher verwirklicht werden, beispielsweise an einem Backenbrecher, einem Kegelbrecher oder einem Walzenbrecher.

Bei einem Backenbrecher weist das Brechaggregat als ersten Brechkörper 11 eine feste Brechbacke und dieser gegenüberstehend einen Brechkörper 14 in Form einer bewegbaren Brechbacke auf. Die feste und die bewegbare Brechbacke sind schräg verlaufend zueinander ausgerichtet, sodass zwischen ihnen ein sich zu einem Brechspalt 15 hin konisch verjüngender Schacht ausgebildet ist. Die bewegbare Brechbacke wird, beispielsweise von einem Exzenter, angetrieben.

Mittels des Exzenters wird die bewegbare Brechbacke in einer elliptischen Bewegung auf die feste Brechbacke zu- und von dieser wegbewegt. Während eines solchen Hubes ändert sich auch der Abstand zwischen den Brechbacken. Durch die Bewegung der bewegbaren Brechbacke wird das zu brechenden Material 19.1 entlang des konischen Schachtes immer weiter zerkleinert, bis es eine Korngröße erreicht hat, die es ihm ermöglicht, den Schacht durch den Brechspalt 15 zu verlassen. Das zerkleinerte Material 19.2 fällt auf ein Brecherabzugsband und wird über dieses weiter gefördert. Die bewegbare Brechbacke kann mittels eines Aktuators 20, der beispielsweise in Form eines Hydraulikzylinders 20 ausgebildet sein kann, gegenüber dem Maschinengestell abgestützt sein. Der Hydraulikzylinder 20 kann beispielsweise in einer Weise ausgebildet sein, wie dies vorstehend beschrieben wurde. An den Hydraulikzylinder 20 kann dann eine Überlast-Auslöseeinrichtung 30 angekoppelt sein.

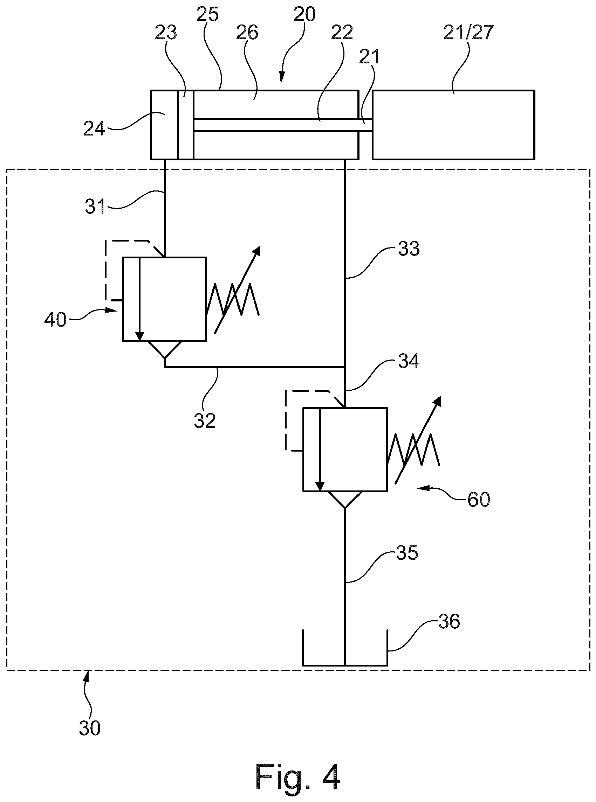

Figur 4 veranschaulicht eine Ausgestaltungsvariante einer Überlast-Auslöseeinrichtung 30. Die Darstellung zeigt wieder den Hydraulikzylinder 20 mit dem im Zylinder 25 geführten Hydraulikzylinder-Kolben 23, der an die Kolbenstange 22 angekoppelt ist. Die Kolbenstange 22 ist aus dem Zylinder 25 herausgeführt. Die Kolbenstange 22 ist in einer Kammer 26 des Zylinders angeordnet, die die Stangenseite des Hydraulikzylinders 20 bildet. Außerhalb des Zylinders 25 ist die Kolbenstange 22 mittels einer Übertragungsvorrichtung 27 an den Brechkörper 14 angekoppelt. Im einfachsten Fall kann die Übertragungsvorrichtung 27 von dem Koppelstück 21 gebildet sein.

Der Druckraum 24 des Hydraulikzylinders 20 ist über eine Druckleitung 31 an ein Druck-Entlastungsventil 40 angeschlossen. Die Kammer 26 (Stangenseite) des Hydraulikzylinders 20 steht über eine Rückführleitung 33 und eine Sammelleitung 34 mit einem Überdruckventil 60 in hydraulischer Verbindung.

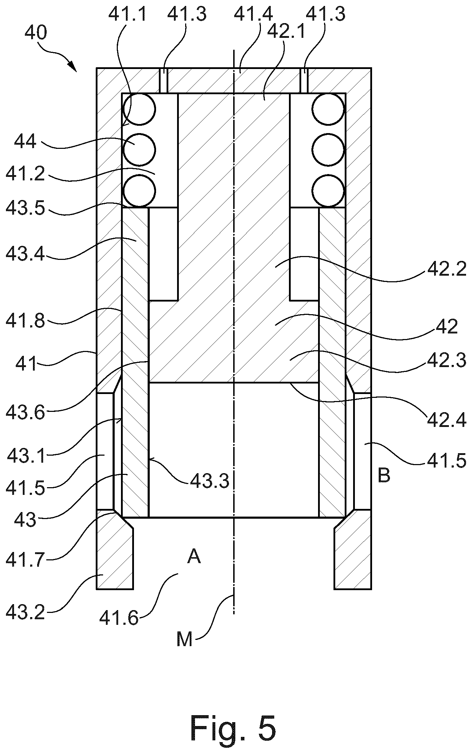

Nachfolgend wird unter Bezugnahme auf Figur 5 eine mögliche Ausgestaltungsvariante eines Druck-Entlastungsventils 40 erläutert. Vorzugsweise ist das Druck-Entlastungsventils 40 an der Stelle der Überlast-Auslöseeinrichtung 30 eingesetzt, die über die Druckleitung 31 mit dem Druckraum 24 in hydraulischer Verbindung steht.

Figur 5 veranschaulicht, dass das Druck-Entlastungsventil 40 einen Zylinder 41 aufweist. Innerhalb des Zylinders 41 ist ein Kolben 43 linear verstellbar geführt.

Der Zylinder 41 weist eine Zylinderinnenwand 41.1 auf, die vorzugsweise hohlzylindrisch ausgebildet ist. Die Zylinderinnenwand 41.1 bildet eine Gleitfläche 41.8. An der Gleitfläche 41.8 ist der Kolben 43 abgedichtet geführt. Dabei kann es so sein, dass der Kolben 43 eine zylindrische Außenwand 43.1 aufweist, die der Gleitfläche 41.8 gegenübersteht, vorzugsweise an dieser geführt ist.

Der Zylinder 41 weist einen oder mehrere Durchlässe 41.3 auf, die einen Niederdruckbereich 41.2 des Druck-Entlastungsventils 40 mit der Umgebung verbinden, wie dies später näher erläutert wird. Der zumindest eine Durchlass 41.3 kann, vorzugsweise in einem Boden eines Hülsenteils, der bevorzugt als Zylinderboden 41.4 des Zylinders 41 ausgebildet ist, eingebracht sein, wie Figur 5 zeigt.

Wie Figur 5 weiter erkennen lässt, besitzt der Zylinder 41 wenigstens eine Ausströmöffnung 41.5, die vorzugsweise als Durchbruch in die Zylinderwand eingebracht ist. Vorzugsweise ist es so, dass die wenigstens eine Ausströmöffnung 41.5 beabstandet zum Zylinderboden 41.4 angeordnet ist, vorzugsweise in dem dem Zylinderboden 41.4 abgewandten Bereich des Zylinders 41 angeordnet ist.

Innerhalb des Zylinders 41 ist eine Überbrückungsvorrichtung 42, beispielsweise in Form eines in den Zylinderinnenraum vorstehenden Vorsprungs, insbesondere in Form eines Dorns, gehalten, wie dies Fig. 5 zeigt. Vorzugsweise ist die Überbrückungsvorrichtung 42 ortsfest mit dem Zylinder 41 verbunden. Es kann auch so sein, dass die Überbrückungsvorrichtung 42 nicht ortsfest mit dem Zylinder 41 verbunden ist. Beispielsweise kann es so sein, dass die Überbrückungsvorrichtung 42 radial ein Spiel hat. Dadurch lassen sich beispielsweise Fertigungstoleranzen ausgleichen. Zusätzlich oder alternativ ist es auch denkbar, dass die Überbrückungsvorrichtung 42 ein axiales Spiel hat, um beispielsweise als Speicher zu dienen.

Gemäß dem vorliegenden Ausführungsbeispiel kann es so sein, dass die Überbrückungsvorrichtung 42 mittels eines Verbindungsabschnitts 42.1 an den Zylinder 41, vorzugsweise den Zylinderboden 41.4 angekoppelt ist.

Die Überbrückungsvorrichtung 42 besitzt einen Träger 42.2, der einen Kopf 42.3 trägt. Der Kopf 42.3 besitzt einen Druckflächenabschnitt 42.4. Der Druckflächenabschnitt 42.4 begrenzt im Schließzustand des Druck-Entlastungsventils 40, eine Druckkammer 41.6 innerhalb des Zylinders 41.

Der Druckflächenabschnitt 42.4 kann als ebene Fläche ausgebildet sein, wie Figur 5 zeigt. Insbesondere kann der Druckflächenabschnitt 42.4 scheibenförmig ausgebildet sein, insbesondere als Kreisscheibe. Denkbar ist es jedoch auch, dass der Druckflächenabschnitt 42.4 aus mehreren Flächenteilen zusammengesetzt ist, die nicht zwangsläufig in einer Ebene liegen müssen, jedoch dennoch die Druckkammer 41.6 begrenzen. In diesem Fall ist es vorteilhaft, wenn die Projektion aller Flächenteile des Druckflächenabschnitts 42.4 in eine Ebene senkrecht zur Mittellängsachse M des Zylinders 41 eine Kreisscheibe bilden.

Figur 5 zeigt, dass die projizierte Fläche des Druckflächenabschnitts 42.4 in eine Ebene quer zur Stellrichtung des Kolbens 43 (insbesondere senkrecht zur Mittellängsachse M des Zylinders 41) die Druckkammer 41.6 einseitig nicht vollständig begrenzt. Insbesondere kann es so sein, wie Figur 5 zeigt, dass eine radial außen an diese projizierte Fläche, anschließende Rest-Fläche, insbesondere eine Ringfläche, vorhanden ist.

Der Kolben 43 kann vorzugsweise wie gezeigt in Form einer Hülse ausgebildet sein. Besonders bevorzugt ist der Kolben 43 rotationssymmetrisch ausgebildet. Es kann so sein, dass der Kolben 43 mit seiner, vorzugsweise zylindrischen, Innenfläche eine Führungsfläche 43.6 bildet. Mittels der Führungsfläche 43.6 kann der Kolben 43 vorzugsweise an der Überbrückungsvorrichtung 42 in Richtung der Mittellängsachse M verstellbar und abgedichtet geführt sein. Vorzugsweise ist es so, dass der Kolben 43 sich durch die vorstehend erwähnten Rest-Fläche hindurch erstreckt.

Die zylindrische Außenfläche des Kolbens 43 bildet eine Außenwand 43.1, die an der inneren Gleitfläche 41.8 der Zylinderinnenwand 41.1 abgedichtet geführt sein kann.

Dem Boden, insbesondere dem Zylinderboden 41.4, zugewandt besitzt der Kolben 43 einen Ansatz, der einen Stützabschnitt 43.4 bildet. Der Stützabschnitt 43.4 besitzt einen Stellabschnitt 43.5, der an einer Feder 44, die wie vorliegend als Schraubenfeder ausgebildet sein kann, mittelbar oder unmittelbar abgestützt ist. Am gegenüberliegenden Ende kann die Feder 44, beispielsweise gegenüber dem Zylinder 41, bzw. dem vorerwähnten Hülsenteil, vorzugsweise am Boden oder Zylinderboden 41.4 mittelbar oder unmittelbar abgestützt sein.

Die Feder 44 ist vorzugsweise zumindest bereichsweise in dem Niederdruckbereich 41.2 aufgenommen. Ebenso kann der Kolben 43 mit seinem Stützabschnitt 43.4 im Niederdruckbereich 41.2 angeordnet sein.

In Figur 5 ist die Schließstellung des Druck-Entlastungsventils 40 gezeigt. In diesem Zustand liegt der Kolben 43 an einem Ventilsitz 41.7 des Zylinders 41 an, wobei der Kolben 43 die wenigstens eine Ausströmöffnung 41.5 verschließt. Der Kolben 43 wird dabei mittels der Feder 44 gegen den Ventilsitz 41.7 vorgespannt. Der Ventilsitz 41.7 ist als umlaufende Fläche, vorzugsweise als Ringfläche, im Bereich der Zylinderinnenwand 41.4 vorgesehen, wie Figur 5 zeigt.

Wie Figur 5 veranschaulicht, kann es so sein, dass der Kolben 43 im Bereich seines der Druckkammer 41.6 zugewandten Endes mit einem Dichtabschnitt an dem Ventilsitz 41.7 anliegt. Vorzugsweise ist es dabei so, dass der Dichtabschnitt im Bereich des stirnseitigen Endes des Kolbens 43 angeordnet ist, wie Figur 5 zeigt.

Der Kolben 43 besitzt eine Kolben-Druckfläche 43.2, die die Druckkammer 41.6 bereichsweise seitlich begrenzt. Die Kolben-Druckfläche 43.2 kann wie vorliegend vorzugsweise in Form einer umlaufenden Ringfläche ausgebildet sein.

Die Projektionen des Druck Flächenabschnitts 42.4 der Überbrückungsvorrichtung 42 und der Kolben-Druckfläche 43.2 des Kolbens 43 in eine Ebene quer zur Stellrichtung des Kolbens 43, insbesondere senkrecht zur Mittellängsachse M, in eine Projektionsebene begrenzt die Druckkammer 41.6 quer zur Stellrichtung des Kolbens 43 einseitig. Dabei ist es so, dass sich die projizierten Flächen nicht überlappen. Es kann jedoch auch so sein, dass sich die Flächen teilweise überlappen. Die Flächennormalen auf die projizierte Kolben-Druckfläche 43.2 und den Druck-Flächenabschnitt 42.4 weisen vorzugsweise in die gleiche Richtung, im vorliegenden Ausführungsbeispiel in die dem Kolbenboden 41.4 entgegengesetzte Richtung.

Der Kolben 43 begrenzt weiterhin teilweise die Druckkammer 41.6 radial außen mit seiner Innenwandung 43.3.

Das Druck-Entlastungsventil 40 ist mit der Druckkammer 41.6 an die Druckleitung 31 angeschlossen, mithin also an den Druckraum 24 des Hydraulikzylinders 20.

Der Niederdruckbereich 41.2 steht über den wenigstens einen Durchlass 41.3 mit der Umgebung in Verbindung. Hierbei kann es so sein, dass im Niederdruckbereich 41.2 der Umgebungsdruck der Luft ansteht, wenn über den wenigstens einen Durchlass 41.3 eine luftleitende Verbindung geschaffen ist.

Alternativ ist der Niederdruckbereich 41.2 über einen Leitungsabschnitt 32 und die Rückführleitung 33 an die Kammer 26 des Hydraulikzylinders 20 angeschlossen. Damit steht der Druck der Stangenseite des Hydraulikzylinders 20 (Druck in der Kammer 26) am Niederdruckbereich 41.2 an.

Bei normalem Brechbetrieb und mit eingestelltem Brechspalt 15 steht das Druck-Entlastungsventil 40 in der in Figur 5 gezeigten Stellung. Der Druck des Druckraums 24 liegt auch an der Druckkammer 41.6 an. Erhöhen sich nun im normalen Brechbetrieb die Brechkräfte, beispielsweise wenn härteres Gesteinsmaterial zur Zerkleinerung ansteht, dann verstellt die Übertragungsvorrichtung 27 die Kolbenstange 22 des Hydraulikzylinders 20 im Zylinder 25. Hierdurch wird auch der Hydraulikzylinder-Kolben 23 verfahren. Wird ein kritischer Grenzdruck dabei nicht überschritten, so weitet sich der Brechspalt 15, beispielsweise in Folge der Kompressibilität des Fluids (insbesondere des Hydrauliköls) und/oder eines elastisch begrenzt verstellbaren Bauteils, ein Stück weit auf, ohne dass das Druck-Entlastungsventils 40 auslöst. Hierdurch passt sich das System an, ohne dass eine Unterbrechung des Brechbetriebs erfolgt.

Vorzugsweise ist es vorgesehen, dass der Kammer 26, also der Stangenseite des Hydraulikzylinders 20 ein Druckregelsystem zugeordnet ist, das das Hydraulikfluid in diesem Bereich vorspannt. Hierdurch wird dann die durch die Feder 44 bewirkte Schließkraft des Kolbens 43 unterstützt, wenn der Niederdruckbereich 41.2 mit der Stangenseite hydraulisch verbunden ist. Zudem ergibt sich hierdurch ein Druck-Entlastungsventil 40, das angepasst auf den jeweiligen Belastungsfall individuell reagieren kann. Wird bei einer relativ hohen Belastung des Brechers, die noch keine Überlastsituation darstellt, der Druck in dem Druckraum 24 des Hydraulikzylinders 20 erhöht, wobei der Hydraulikzylinder-Kolben 23 des Hydraulikzylinders 20 in den Druckraum 24 einfährt, so fällt der Druck auf der Stangenseite ab. Das Druckregelsystem regelt dann den Druck auf der Stangenseite nach. Hier hat die Druckregelung eine begrenzte Kapazität, um den Druck aufrechtzuerhalten. Am Druck-Entlastungsventil 40 führt somit die Druckregelung dazu, dass der Kolben 43 des Druck-Entlastungsventils 40 in der Schließstellung verbleibt. Der Brechbetrieb kann mithin in dieser Lastsituation fortgesetzt werden.

Tritt nun eine Überlastsituation auf, so fällt der Druck auf der Stangenseite stark ab und die Druckregelung hält den Druck auf der Stangenseite nicht mehr aufrecht. Dieser Druckabfall führt dann in Verbindung mit dem schlagartigen Anstieg des Drucks im Druckraum 24 und damit in der Druckkammer 41.6 zu einer Verstellung des Kolbens 43 in Richtung der Mittellängsachse M. Hierdurch wird die wenigstens eine Ausströmöffnung 41.5 des Druck-Entlastungsventils 40 freigegeben. Das in der Druckkammer 41.6 gehaltene Fluid entspannt sich über die Ausströmöffnung 41.5. Dabei kann es so sein, dass die wenigstens eine Ausströmöffnung 41.5 in den Leitungsabschnitt 32 mündet.

Steht der Niederdruckbereich 41.2 mit der Umgebung in luftleitender Verbindung, dann öffnet das Druck-Entlastungsventil, wenn die infolge des in der Druckkammer 41.6 anstehenden Drucks und der wirksamen Kolben-Druckfläche resultierende Öffnungskraft in Richtung der Mittellängsachse M auf den Kolben 43 die in entgegengesetzte Richtung wirkende Schließkraft übersteigt. Die Schließkraft ergibt sich aus der Federkraft der Feder 44 zuzüglich der Druckkraft, die sich aus dem Umgebungsdruck und der in eine Ebene quer zur Bewegungsrichtung des Kolbens 43 projizierten Begrenzungsfläche des Kolbens 43, mit der der Niederdruckbereich 42.6 begrenzt wird, errechnet.

Das aus dem Druck-Entlastungsventil 40 ausströmende Fluid gelangt in die Kammer 26 des Hydraulikzylinders 20. Da die Kammer 26 nicht das gesamte verdrängte Fluid aufnehmen kann, wird ein Teil des Fluids in einen Tank 36 abgeleitet. Hierzu ist der Leitungsabschnitt 32 über eine Sammelleitung 34 an ein Überdruckventil 60 angeschlossen. Anschließend an das Druck-Entlastungsventil 60 wird das überschüssige Fluid über eine Ableitung 35 dem Tank 36 zugeführt. Das Überdruckventil 60 ist so ausgebildet, dass es erst ab einem Druck-Schwellwert öffnet, um die Verbindung zum Tank 36 herzustellen. Der Aufbau des Überdruckventils 60 kann zur Reduzierung des Teileaufwandes beispielsweise entsprechend dem Druck-Entlastungsventil 40 sein.

Nach Beendigung des Überlastfalls wird über ein Regelsystem Hydraulikfluid in den Druckraum 24 des Hydraulikzylinders 20 gefördert, bis sich die gewünschte Breite des Brechspalts 15 wieder einstellt. Das Hydraulikfluid kann dabei von dem Tank 36 mittels einer Pumpe (nicht gezeigt) in den Druckraum 24 zurückgeführt werden.

## Patentansprüche

1. Brecher für mineralische Werkstoffe oder Recyclingwerkstoffe, insbesondere Rotationsprallbrecher, Backenbrecher, Kegelbrecher oder Walzenbrecher, mit einem Brechaggregat (10), das einen ersten Brechkörper (11), insbesondere einen Rotor oder eine Brechbacke aufweist, wobei dem ersten Brechkörper (11) ein zweiter bewegbarer Brechkörper (14), insbesondere eine Prallschwinge oder eine Brechbacke, zugeordnet ist, wobei zwischen den Brechkörpern (11, 14) ein Brechspalt (15) gebildet ist, wobei mit einem der Brechkörper (11, 14) ein Hydraulikzylinder (20) gekoppelt ist, der angeordnet und ausgebildet ist, um in einer Ausweichbewegung eine die Breite des Brechspalts (15) vergrößernde Bewegung des angekoppelten Brechkörpers (11, 14) zuzulassen, wobei ein Druckraum (24) des Hydraulikzylinders (20) an eine Druckkammer (41.6) eines Druck-Entlastungsventils (40) einer Überlast-Auslöseeinrichtung (30) angeschlossen ist, wobei ein Kolben (43) des Druck-Entlastungsventils (40) zwischen einer Schließstellung und einer Öffnungsstellung verstellbar ist, wobei in der Schließstellung eine fluidleitende Verbindung zwischen der Druckkammer (41.6) und einem Druck-Ausgleichsbereich (B) gesperrt und in der Öffnungsstellung die fluidleitende Verbindung zumindest bereichsweise freigegeben ist, und wobei der Kolben (43) wenigstens eine Kolben-Druckflächen (43.2) aufweist, mittels der der Kolben (43) die Druckkammer (41.6) in der Schließstellung quer zur Stellrichtung des Kolbens (43) begrenzt,
**dadurch gekennzeichnet,**
**dass** im Schließzustand des Druck-Entlastungsventils die Projektion der Kolben-Druckfläche (43.2) oder der Kolben-Druckflächen (43.2) des Kolbens (43) in eine Projektionsebene quer zur Stellrichtung des Kolbens (43), vorzugsweise in die Schließebene, nur einen Teil der Druckkammer (41.6) quer zur Stellrichtung des Kolbens (43) begrenzt.

2. Brecher nach Anspruch 1, **dadurch gekennzeichnet, dass** eine Überbrückungsvorrichtung (42) vorgesehen ist, gegenüber der der Kolben (43) verstellbar ist, dass die Überbrückungsvorrichtung (42) wenigstens einen Druckflächenabschnitt (42.4) aufweist, der die Druckkammer (41.6) quer zur Stellrichtung des Kolbens (43) begrenzt, und dass eine Projektion des Druckflächenabschnitts (42.4) oder der Druckflächenabschnitte (42.4) in Richtung der Stellbewegung des Kolbens (43) in die Projektionsebene, die Kolben-Druckfläche-/n (43.2) nicht oder nicht vollständig überdeckt.

3. Brecher nach Anspruch 2, **dadurch gekennzeichnet, dass** Flächennormalen auf die Projektionen der Kolben-Druckfläche-/n (43.2) und des/der Druckflächenabschnitt-/e (42.4) in die gleiche Richtung weisen.

4. Brecher nach einem der Ansprüche 1 bis 3, **dadurch gekennzeichnet, dass** der Kolben (43) eine zylindrische Außenwand (43.1) aufweist, mittels der er einer Zylinderinnenwand (41.1) des Zylinders (41) gegenübersteht, der die Druckkammer (41.6) bildet, und dass der Kolben (43) ringförmig ausgebildet ist und eine vorzugsweise zylindrische Innenwand (43.3) aufweist.

5. Brecher nach einem der Ansprüche 1 bis 4, **dadurch gekennzeichnet, dass** der Kolben (43) mit einem Stützabschnitt (43.4) außerhalb der Druckkammer (41.6) gegenüber einer Feder (44) abgestützt ist, wobei die Feder (44) in Richtung der Schließstellung des Kolbens (43) eine Vorspannkraft in den Kolben (43) einbringt, um den Kolben (43) gegen einen Ventilsitz (41.7) vorzuspannen.

6. Brecher nach einem der Ansprüche 2 bis 5, **dadurch gekennzeichnet, dass** die Überbrückungsvorrichtung (42) mittels eines Verbindungsabschnitts (42.1) mit dem/einem Zylinder des Druck-Entlastungsventils (40) mittelbar oder unmittelbar verbunden, insbesondere ortsfest oder verstellbar verbunden ist, wobei vorzugsweise vorgesehen ist, dass die Überbrückungsvorrichtung (42) in Richtung der Stellbewegung des Kolbens (43) und/oder quer zur Stellrichtung des Kolbens (43) verstellbar ist.

7. Brecher nach einem der Ansprüche 1 bis 6, **dadurch gekennzeichnet, dass** die Überbrückungsvorrichtung (42) an einem Träger (42.2) einen Kopf (42.3) im Zylinderinnenraum hält, und dass der Kopf (42.3) den wenigstens einen Druckflächenabschnitt (42.4) bildet oder trägt.

8. Brecher nach einem der Ansprüche 1 bis 7, **dadurch gekennzeichnet, dass** der Kolben (43) einen Niederdruckbereich (41.2) des Druck-Entlastungsventils (40) gegenüber der Druckkammer (41.6) abgrenzt, und dass der Kolben (43) bei seiner Verstellung von der Schließ- in die Öffnungsstellung mit einem Stellabschnitt (43.5) in dem Niederdruckbereich (41.2) verstellt wird.

9. Brecher nach Anspruch 8, **dadurch gekennzeichnet, dass** der Niederdruckbereich (41.2) über wenigstens einen Durchlass (41.3) mit der Umgebung in luftleitender Verbindung oder hydraulisch mit einer Hydraulikkomponente, insbesondere mit dem Hydraulikzylinder (20), vorzugsweise mit einer Kammer, die eine Kolbenstange (22) des Hydraulikzylinders (20) aufnimmt, in Verbindung steht.

10. Brecher nach einem der Ansprüche 1 bis 9, **dadurch gekennzeichnet, dass** der Zylinder (41) des Druck-Entlastungsventils (40) im Bereich der Druckkammer (41.6) wenigstens eine Ausströmöffnung (41.5) aufweist, die in der Schließstellung des Kolbens (43) von einem an die Kolben-Druckfläche (43.2) anschließenden Körperbereich des Kolbens (43) überdeckt und in der Öffnungsstellung des Kolbens (43) zumindest bereichsweise freigegeben ist, und dass die Ausströmöffnung (41.5) über einen Leitungsabschnitt (32) mittelbar oder unmittelbar zu einem Tank (36) und/oder mittelbar oder unmittelbar über eine Rückführleitung (33) mit einer Kammer (26), die eine Kolbenstange (22) des Hydraulikzylinders (20) aufnimmt, in Verbindung steht.

11. Brecher nach einem der Ansprüche 1 bis 10, **dadurch gekennzeichnet, dass** die Projektion der Kolben-Druckfläche (43.2) oder der Kolben-Druckflächen (43.2) des Kolbens (43) quer zur Stellrichtung des Kolbens (43) in die/eine Schließebene mindestens 5 % maximal 80 %, besonders bevorzugt mindestens 10 % und maximal 50 % der Projektion der Kolben-Druckfläche (43.2) oder der Kolben-Druckflächen (43.2) des Kolbens (43) quer zur Stellrichtung des Kolbens (43) in die Schließebene zuzüglich der Druckflächenabschnitte (42.4) der Überbrückungsvorrichtung (42) überdeckt.

12. Brecher nach einem der Ansprüche 1 bis 11, **dadurch gekennzeichnet, dass** maximal 50 %, vorzugsweise maximal 25%, der Projektion der Kolben-Druckfläche (43.2) oder der Kolben-Druckflächen (43.2) des Kolbens (43) quer zur Stellrichtung des Kolbens (43) in die/eine Schließebene im Bereich der Ausströmöffnung (41.5) liegt.

13. Verfahren zum Betrieb eines Brechers für mineralische Werkstoffe oder Recyclingwerkstoffe, insbesondere Rotationsprallbrecher, Backenbrecher, Kegelbrecher oder Walzenbrecher, mit einem Brechaggregat (10), das einen ersten Brechkörper (11), insbesondere einen Rotor oder eine Brechbacke aufweist, wobei dem ersten Brechkörper (11) ein zweiter bewegbarer Brechkörper (14), insbesondere eine Prallschwinge oder eine Brechbacke, zugeordnet ist, wobei zwischen den Brechkörpern (11, 14) ein Brechspalt (15) gebildet ist, wobei mit einem der Brechkörper (11, 14) ein Hydraulikzylinder (20) gekoppelt ist, der in einem Überlast-Betriebszustand eine Ausweichbewegung durchführt, um eine die Breite des Brechspalts (15) vergrößernde Bewegung des angekoppelten Brechkörpers (11, 14) zuzulassen, wobei ein Druckraum (24) des Hydraulikzylinders (20) an eine Druckkammer (41.6) eines Druck-Entlastungsventils (40) einer Überlast-Auslöseeinrichtung (30) angeschlossen ist, wobei ein Kolben (43) des Druck-Entlastungsventils (40) zwischen einer Schließstellung und einer Öffnungsstellung verstellbar ist, wobei in der Schließstellung eine fluidleitende Verbindung zwischen der Druckkammer (41.6) und einem Druck-Ausgleichsbereich (B) gesperrt und in der Öffnungsstellung die fluidleitende Verbindung zumindest bereichsweise freigegeben ist, und wobei der Kolben (43) wenigstens eine Kolben-Druckflächen (43.2) aufweist, mittels der der Kolben (43) die Druckkammer (41.6) in der Schließstellung quer zur Stellrichtung des Kolbens (43) begrenzt,
**dadurch gekennzeichnet,**
**dass** die Projektion der Kolben-Druckfläche (43.2) oder der Kolben Druckflächen (43.2) des Kolbens (43) in eine Projektionsebene quer zur Stellrichtung des Kolbens nur einen Teil der Druckkammer (41.6) quer zur Stellrichtung des Kolbens (43) begrenzt, dass bei Überschreiten eines Druck-Schwellwertes im Druckraum (24) des Hydraulikzylinders (20) der Kolben (43) des Druck-Entlastungsventils (40) verstellt und bei Unterschreiten eines Entlastungsdrucks in der Druckkammer (41.6) der Kolben (43) mittels einer Feder (44) zurück in die Schließstellung bewegt wird.

14. Verfahren nach Anspruch 13, **dadurch gekennzeichnet, dass** der Brecher gemäß einem der Ansprüche 1 bis 12 gestaltet ist.

## Claims

1. A crusher for mineral materials or recycling materials, in particular a rotary impact crusher, jaw crusher, cone crusher or roll crusher, having a crusher unit (10), which has a first crusher body (11), in particular a rotor or a crushing jaw, wherein the first crusher body (11) is assigned to a second movable crusher body (14), in particular an impact rocker or a crushing jaw, wherein a crushing gap (15) is formed between the crusher bodies (11, 14), wherein a hydraulic cylinder (20) is coupled to one of the crusher bodies (11, 14), which hydraulic cylinder is disposed and designed to permit a motion of the coupled crusher body (11, 14), which motion increases the width of the crushing gap (15) in an evasive motion, wherein a pressure space (24) of the hydraulic cylinder (20) is connected to a pressure chamber (41.6) of a pressure relief valve (40) of an overload triggering device (30), wherein a piston (43) of the pressure relief valve (40) can be moved between a closed position and an open position, wherein a fluid-conveying connection between the pressure chamber (41.6) and a pressure equalization area (B) is blocked in the closed position and in the open position the fluid-conveying connection is at least sectionally opened, and wherein the piston (43) has at least one piston pressure surface (43.2) by means of which the piston (43) delimits the pressure chamber (41.6) in the closed position transversely to the actuating direction of the piston (43),
**characterized**
**in that** in the closed state of the pressure relief valve, the projection of the piston pressure surface(s) (43.2) of the piston (43) in a projection plane transverse to the actuating direction of the piston (43), preferably in the closing plane, delimits only a part of the pressure chamber (41.6) transverse to the actuating direction of the piston (43).

2. The crusher according to claim 1, **characterized in that** a bridging device (42) is provided, relative to which the piston (43) can adjusted, **in that** the bridging device (42) has at least one pressure surface section (42.4) which delimits the pressure chamber (41.6) transversely to the actuating direction of the piston (43), and **in that** a projection of the pressure surface section(s) (42.4) in the direction of the actuating motion of the piston (43) in the projection plane does not or does not completely cover the piston pressure surface(s) (43.2).

3. The crusher according to claim 2, **characterized in that** surface normals on the projections of the piston pressure surface(s) (43.2) and the pressure surface section(s) (42.4) point in the same direction.

4. The crusher according to any of claims 1 to 3, **characterized in that** the piston (43) has a cylindrical outer wall (43.1) by means of which it faces an inner cylinder wall (41.1) of the cylinder (41) forming the pressure chamber (41.6), and **in that** the piston (43) is annular and comprises a preferably cylindrical inner wall (43.3).

5. The crusher according to any of claims 1 to 4, **characterized in that** a support section (43.4) of the piston (43) is supported outside the pressure chamber (41.6) with respect to a spring (44), wherein the spring (44) transfers a preload force into the piston (43) in the direction of the closed position of the piston (43) in order to preload the piston (43) against a valve seat (41.7).

6. The crusher according to any of claims 2 to 5, **characterized in that** the bridging device (42) is indirectly or directly connected, in particular in a stationary or movable manner, to the/one cylinder of the pressure relief valve (40) by means of a connection section (42.1), wherein preferably provision is made for the bridging device (42) to be adjustable in the direction of the actuating motion of the piston (43) and/or transversely to the actuating direction of the piston (43).

7. The crusher according to any of claims 1 to 6, **characterized in that** the bridging device (42) holds a head (42.3) on a beam (42.2) in the cylinder interior, and **in that** the head (42.3) forms or bears the at least one pressure surface section (42.4).

8. The crusher according to any of claims 1 to 7, **characterized in that** the piston (43) delimits a low-pressure area (41.2) of the pressure-relief valve (40) with respect to the pressure chamber (41.6), and **in that** the piston (43) is moved in the low-pressure area (41.2) by an actuating section (43.5) when it is moved from the closed position into the open position.

9. The crusher according to claim 8, **characterized in that** the low-pressure area (41.2) is connected to the environment via at least one passage (41.3) in an air-conveying connection or hydraulically to a hydraulic component, in particular to the hydraulic cylinder (20), preferably to a chamber, which accommodates a piston rod (22) of the hydraulic cylinder (20).

10. The crusher according to any of claims 1 to 9, **characterized in that** the cylinder (41) of the pressure relief valve (40) comprises at least one outflow opening (41.5) in the area of the pressure chamber (41.6), which outflow opening in the closed position of the piston (43) is covered by a body area of the piston (43) adjoining the piston pressure surface (43.2) and, in the open position of the piston (43), is at least partially uncovered, and **in that** the outflow opening (41.5) is connected via a line section (32) directly or indirectly to a tank (36) and/or directly or indirectly via a return line (33) to a chamber (26) which accommodates a piston rod (22) of the hydraulic cylinder (20).

11. The crusher according to any of claims 1 to 10, **characterized in that** the projection of the piston pressure surface(s) (43.2) of the piston (43) transverse to the actuating direction of the piston (43) into the/a closing plane covers at least 5%, at most 80%, particularly preferably at least 10% and at most 50% of the projection of the piston pressure surface(s) (43.2) of the piston (43) transverse to the actuating direction of the piston (43) in the closing plane plus the pressure surface sections (42.4) of the bridging device (42).

12. The crusher according to any of claims 1 to 11, **characterized in that** a maximum of 50%, preferably a maximum of 25%, of the projection of the piston pressure surface(s) (43.2) of the piston (43) is located transverse to the actuating direction of the piston (43) in the/a closing plane in the area of the outflow opening (41.5).

13. A method for operating a crusher for mineral materials or recycling materials, in particular a rotary impact crusher, jaw crusher, cone crusher or roll crusher, having a crusher unit (10), which has a first crusher body (11), in particular a rotor or a crushing jaw, wherein the first crusher body (11) is assigned to a second movable crusher body (14), in particular an impact rocker or a crushing jaw, wherein a crushing gap (15) is formed between the crusher bodies (11, 14), wherein a hydraulic cylinder (20) is coupled to one of the crusher bodies (11, 14), which hydraulic cylinder conducts an evasive motion in an overload operation to permit a motion of the coupled crusher body (11, 14), which motion increases the width of the crushing gap (15), wherein a pressure space (24) of the hydraulic cylinder (20) is connected to a pressure chamber (41.6) of a pressure relief valve (40) of an overload triggering device (30), wherein a piston (43) of the pressure relief valve (40) can be moved between a closed position and an open position, wherein a fluid-conveying connection between the pressure chamber (41.6) and a pressure equalization area (B) is blocked in the closed position and in the open position the fluid-conveying connection is at least sectionally opened, and wherein the piston (43) has at least one piston pressure surface (43.2) by means of which the piston (43) delimits the pressure chamber (41.6) in the closed position transverse to the actuating direction of the piston (43),
**characterized**
**in that** the projection of the piston pressure surface(s) (43.2) of the piston (43) in a projection plane transverse to the actuating direction of the piston delimits only a part of the pressure chamber (41.6) transverse to the actuating direction of the piston (43), in that when a pressure threshold value in the pressure space (24) of the hydraulic cylinder (20) is exceeded, the piston (43) of the pressure relief valve (40) is moved and when the pressure in the pressure chamber (41.6) falls below a relief pressure, the piston (43) is returned to the closed position by means of a spring (44).

14. A method according to claim 13, **characterized in that** the crusher is designed according to any of claims 1 to 12.

## Revendications

1. Concasseur pour matériaux minéraux ou matériaux de recyclage, en particulier concasseur à percussion rotatif, concasseur à mâchoires, concasseurs à cône ou concasseurs à cylindres, comportant un groupe de concassage (10) qui présente un premier corps de concassage (11), notamment un rotor ou une mâchoire de concassage, un deuxième corps de concassage mobile (14), notamment un battant d'impact ou une mâchoire de concassage, étant associé au premier corps de concassage (11), un interstice de concassage (15) étant formé entre les corps de concassage (11, 14), un vérin hydraulique (20) étant couplé à l'un des corps de concassage (11, 14), lequel vérin est agencé et conçu pour permettre, lors d'un mouvement d'évitement, un déplacement du corps de concassage couplé (11, 14) permettant d'augmenter la largeur de l'interstice de concassage (15); une cavité de pression (24) du vérin hydraulique (20) étant raccordée à une chambre de pression (41.6) d'une soupape de décharge de pression (40) d'un dispositif de déclenchement en cas de surcharge (30), un piston (43) de la soupape de décharge de pression (40) est réglable entre une position de fermeture et une position d'ouverture, la communication fluidique entre la chambre de pression (41.6) et une zone d'équilibrage de pression (B) étant bloquée dans la position de fermeture et étant libérée, au moins partiellement, dans la position d'ouverture, et le piston (43) comportant au moins une surface de pression de piston (43.2) au moyen de laquelle le piston (43) délimite la chambre de pression (41.6) dans la position de fermeture, transversalement à la direction de déplacement du piston (43),
**caractérisé**
**en ce que**, lorsque la soupape de décharge de pression est en position de fermeture, la projection de la surface de pression de piston (43.2) ou des surfaces de pression de piston (43.2) du piston (43) dans un plan de projection transversal à la direction de déplacement du piston (43), de préférence dans le plan de fermeture, ne délimite qu'une partie de la chambre de pression (41.6) transversalement à la direction de déplacement du piston (43).

2. Concasseur selon la revendication 1, **caractérisé en ce qu'**il est prévu un dispositif de dérivation (42) par rapport auquel le piston (43) est réglable, **en ce que** le dispositif de dérivation (42) comporte au moins une partie de surface de pression (42.4) qui délimite la chambre de pression (41.6) transversalement à la direction de déplacement du piston (43), et **en ce qu'**une projection de la ou des parties de surface de pression (42.4) dans la direction du mouvement de déplacement du piston (43) dans le plan de projection ne recouvre pas, ou pas entièrement, la ou les surfaces de pression de piston (43.2).

3. Concasseur selon la revendication 2, **caractérisé en ce que** les normales aux projections de la ou des surfaces de pression de piston (43.2) et de la ou des parties de surface de pression (42.4) sont orientées dans la même direction.

4. Concasseur selon l'une des revendications 1 à 3, **caractérisé en ce que** le piston (43) présente une paroi extérieure cylindrique (43.1) au moyen de laquelle il fait face à une paroi intérieure (41.1) du cylindre (41) qui forme la chambre de pression (41.6), et **en ce que** le piston (43) est de forme annulaire et comporte une paroi intérieure (43.3) de préférence cylindrique.

5. Concasseur selon l'une des revendications 1 à 4, **caractérisé en ce que** le piston (43) est soutenu, par une partie d'appui (43.4) à l'extérieur de la chambre de pression (41.6) en opposition à un ressort (44), le ressort (44) exerçant sur le piston (43) une force de précontrainte en direction de la position de fermeture du piston (43) afin de précontraindre le piston (43) contre un siège de soupape (41.7).

6. Concasseur selon l'une des revendications 2 à 5, **caractérisé en ce que** le dispositif de dérivation (42) est relié, au moyen d'une partie de raccordement (42.1) avec le cylindre de la soupape de décharge de pression (40), de manière indirecte ou directe, en particulier de manière fixe ou réglable, étant prévu de préférence que le dispositif de dérivation (42) soit réglable dans la direction du mouvement de réglage du piston (43) et/ou transversalement à la direction de déplacement du piston (43).

7. Concasseur selon l'une des revendications 1 à 6, **caractérisé en ce que** le dispositif de dérivation (42) maintient, sur un support (42.2), une tête (42.3) à l'intérieur du cylindre, et **en ce que** la tête (42.3) forme ou porte la au moins une partie de surface de pression (42.4).

8. Concasseur selon l'une des revendications 1 à 7, **caractérisé en ce que** le piston (43) délimite une zone de basse pression (41.2) de la soupape de décharge de pression (40) par rapport à la chambre de pression (41.6), et **en ce que**, lors de son déplacement de la position de fermeture à la position d'ouverture, le piston (43) se déplace avec une partie de réglage (43.5) dans la zone de basse pression (41.2).

9. Concasseur selon la revendication 8, **caractérisé en ce que** la zone de basse pression (41.2) est en communication avec l'atmosphère par au moins un passage (41.3) pour le passage de l'air ou en liaison hydraulique avec un composant hydraulique, en particulier avec le vérin hydraulique (20), de préférence avec une chambre recevant une tige de piston (22) du vérin hydraulique (20).

10. Concasseur selon l'une des revendications 1 à 9, **caractérisé en ce que** le cylindre (41) de la soupape de décharge de pression (40) présente, dans la zone de la chambre de pression (41.6), au moins un orifice d'échappement (41.5) qui, dans la position de fermeture du piston (43), est recouvert par une partie du corps du piston (43) adjacente à la surface de pression de piston (43.2) et qui, dans la position d'ouverture du piston (43), est dégagée au moins partiellement, et **en ce que** l'orifice d'échappement (41.5) est reliée, directement ou indirectement, par l'intermédiaire d'un tronçon de conduite (32), à un réservoir (36) et/ou, directement ou indirectement, par l'intermédiaire d'une conduite de retour (33), à une chambre (26) qui reçoit une tige de piston (22) du vérin hydraulique (20).

11. Concasseur selon l'une des revendications 1 à 10, **caractérisé en ce que** la projection de la surface de pression de piston (43.2) ou des surfaces de pression de piston (43.2) du piston (43), transversalement à la direction de déplacement du piston (43) dans le plan de fermeture, représente au moins 5 % et au plus 80 %, de préférence au moins 10 % et au plus 50 %, de la projection de la surface de pression de piston (43.2) ou des surfaces de pression de piston (43.2) du piston (43), perpendiculairement à la direction de déplacement du piston (43) dans le plan de fermeture, à laquelle s'ajoutent les parties de surface de pression (42.4) du dispositif de dérivation (42).

12. Concasseur selon l'une des revendications 1 à 11, **caractérisé en ce qu'**au maximum 50 %, de préférence au maximum 25 %, de la projection de la surface de pression de piston (43.2) ou des surfaces de pression de piston (43.2) du piston (43), perpendiculairement à la direction de déplacement du piston (43), se situent dans le plan de fermeture au niveau de l'orifice d'échappement (41.5).

13. Procédé de fonctionnement d'un concasseur pour matériaux minéraux ou matériaux de recyclage, en particulier un concasseur à percussion rotatif, un concasseur à mâchoires, un concasseur à cône ou un concasseur à cylindres, comprenant un groupe de concassage (10) qui comporte un premier corps de concassage (11), notamment un rotor ou une mâchoire de concassage, un deuxième corps de concassage mobile (14), notamment un battant d'impact ou une mâchoire de concassage, étant associé au premier corps de concassage (11), un interstice de concassage (15) étant formé entre les corps de concassage (11, 14), un vérin hydraulique (20) étant couplé à l'un des corps de concassage (11, 14) qui, dans un état de fonctionnement en surcharge, effectue un mouvement d'échappement afin de permettre un déplacement du corps de concassage couplé (11, 14) permettant d'augmenter la largeur de la fente de concassage (15), une cavité de pression (24) du vérin hydraulique (20) étant raccordée à une chambre de pression (41.6) d'une soupape de décharge de pression (40) d'un dispositif de déclenchement en cas de surcharge (30), un piston (43) de la soupape de décharge de pression (40) est réglable entre une position de fermeture et une position d'ouverture, la communication fluidique entre la chambre de pression (41.6) et une zone d'équilibrage de pression (B) étant bloquée dans la position de fermeture et étant libérée, au moins partiellement, dans la position d'ouverture, et le piston (43) présentant au moins une surface de pression de piston (43.2) au moyen de laquelle le piston (43) délimite la chambre de pression (41.6) dans la position de fermeture, transversalement à la direction de déplacement du piston (43),
**caractérisée**
**en ce que** la projection de la surface de pression de piston (43.2) ou des surfaces de pression (43.2) du piston (43) dans un plan de projection transversal à la direction de déplacement du piston ne délimite qu'une partie de la chambre de pression (41.6) transversalement à la direction de déplacement du piston (43), qu'en cas de dépassement d'un seuil de pression dans la cavité de pression (24) du vérin hydraulique (20), le piston (43) de la soupape de décharge de pression (40) se déplace, et lorsque la pression dans la chambre de pression (41.6) descend en dessous d'une pression de décharge, le piston (43) est ramené en position de fermeture par un ressort (44).

14. Procédé selon la revendication 13, **caractérisé en ce que** le concasseur est conçu selon l'une des revendications 1 à 12.
